# FASCICULE DE BREVET EUROPEEN

(11) **EP 1 051 894 B1**
(45) Date de publication et mention de la délivrance du brevet: **20.08.2003**
(21) Numéro de dépôt: 00440122.0
(22) Date de dépôt: 03.05.2000
(51) Int. Cl.: A01B 59/042, B60D 1/07

(54) **Dispositif d'adaptation pour barre d'attelage de tracteur**
Anpassungsvorrichtung für Schlepperzugstangen
Tractor tow bar adaptor

(30) Priorité: 11.05.1999 FR 9906140
(43) Date de publication de la demande: 15.11.2000
(73) Titulaire: KUHN S.A., 67706 Saverne Cedex (FR)
(72) Inventeur: Ligouy, Jean-Baptiste, 57405 Guntzviller (FR)

(56) Documents cités:
- DE-C- 916 861
- GB-A- 2 022 389
- US-A- 2 273 410
- US-A- 3 204 984
- US-A- 4 008 905

## Description

La présente invention se rapporte au domaine technique du machinisme agricole et plus particulièrement au domaine des accessoires utilisés pour atteler une machine agricole à un tracteur.

La présente invention concerne un dispositif d'adaptation permettant de lier de façon optimale le timon d'une machine agricole à une barre d'attelage d'un tracteur. Un tel dispositif d'adaptation trouve son application plus particulièrement dans le domaine des machines agricoles tractées.

Il est connu par GB 2022389-A un dispositif d'adaptation pour une barre d'attelage de machines agricoles comportant :
- une barre d'adaptation pourvue d'un axe d'attelage au voisinage de l'une de ses extrémités, ledit axe d'attelage s'étendant sensiblement verticalement lorsque le dispositif d'adaptation est monté sur la barre d'attelage, et d'un axe de liaison destiné à traverser une ouverture ménagée dans ladite barre d'attelage, et
- des moyens permettant de réduire ou d'annuler le jeu mécanique entre la barre d'attelage et la barre d'adaptation.

De tels dispositifs permettent d'optimiser la distance entre le tracteur et la machine agricole, lorsque cette dernière est animée par la prise de force dudit tracteur. La prise de force est en général reliée à la machine agricole par l'intermédiaire d'un arbre à joints universels, ce qui limite par conséquent l'inclinaison entre le tracteur et le timon d'attelage lorsque ladite machine est animée.

L'optimisation de la distance entre la machine agricole et la prise de force du tracteur permet alors d'obtenir des inclinaisons de l'arbre de transmission allant jusqu'à 45° au niveau d'un joint homocinétique. En outre, lorsque l'arbre de transmission télescopique prend son extension maximale, c'est-à-dire lorsque la machine agricole et le tracteur se déplacent en ligne droite, il est impératif que les parties télescopiques se recouvrent sur une distance minimale.

Par ailleurs, l'arbre de transmission se termine par un cardan à chaque extrémité, réduisant par la même occasion la longueur disponible pour le recouvrement maximal, lorsque l'inclinaison dudit arbre de transmission est de 45° par rapport à la direction de traction. Toutes ces conditions imposent une longueur minimale de la barre d'attelage que l'on peut atteindre à l'aide du dispositif d'adaptation. La longueur standardisée des barres d'attelage livrées avec les tracteurs n'est donc plus un obstacle pour l'attelage de certains types de machines.

Le dispositif connu est constitué d'une barre d'attelage complémentaire présentant à l'une de ses extrémités une portion sous forme de tube rectangulaire dans lequel la barre d'attelage du tracteur peut s'engager. La portion du tube rectangulaire comporte à cet effet des ouvertures venant en regard d'une ouverture ménagée dans la barre d'attelage de manière à ce que ces ouvertures puissent être traversées par un axe de liaison. Ce dernier traverse également un jeu de cales logées à l'intérieur du tube rectangulaire et destinées à réduire le jeu mécanique vertical de la barre d'attelage dans ledit tube rectangulaire. Une vis de serrage, montée sur une paroi latérale, est prévue pour rattraper le jeu latéral de la barre d'attelage.

De tels dispositifs d'adaptation présentent l'inconvénient de ne pas rattraper suffisamment le jeu mécanique existant entre la barre d'adaptation et la barre d'attelage. En outre, les efforts ne sont pas transmis uniformément à la barre d'attelage et augmentent par conséquent l'usure et les risques de détérioration.

Le but de la présente invention vise donc à réaliser un dispositif d'adaptation permettant de réduire substantiellement ou d'annuler le jeu mécanique entre la barre d'adaptation et la barre d'attelage ainsi qu'à répartir de façon plus homogène les efforts exercés sur lesdites barres.

Le but de la présente invention est atteint à l'aide d'un dispositif d'adaptation pour une barre d'attelage d'un tracteur agricole comportant :
- une barre d'adaptation pourvue d'un axe d'attelage au voisinage de l'une de ses extrémités, ledit axe d'attelage s'étendant sensiblement verticalement lorsque le dispositif d'adaptation est monté sur la barre d'attelage, et d'un axe de liaison destiné à traverser une ouverture ménagée dans ladite barre d'attelage, et
- des moyens permettant de réduire ou d'annuler le jeu mécanique entre la barre d'attelage et la barre d'adaptation,
caractérisé en ce que lesdits moyens permettant de réduire ou d'annuler ledit jeu mécanique entre la barre d'attelage et la barre d'adaptation comportent :
- deux flasques montés respectivement latéralement sur chaque côté de la barre d'adaptation à l'aide de deux tiges de montage, l'une des tiges de montage servant d'axe de pivotement de ladite barre d'adaptation par rapport auxdits flasques,
- une tige de blocage liée aux deux flasques et localisée dans une zone s'étendant entre les deux tiges de montage, et
- une vis de serrage liée à la barre d'adaptation et venant en appui contre une partie solidaire de l'un au moins des flasques, de manière à pouvoir enserrer la barre d'attelage entre la barre d'adaptation et la tige de blocage lors de la manoeuvre de la vis de serrage, lesdites tiges de montage servant à enserrer latéralement la barre d'adaptation et la barre d'attelage via les deux flasques.

D'autres caractéristiques et avantages ressortiront de la description détaillée figurant ci-après, en référence aux dessins annexés donnés à titre d'exemples non limitatifs, dans lesquels :
- la **figure 1** représente une vue de côté partielle d'une machine agricole attelée à un tracteur à l'aide d'un dispositif d'adaptation conforme à l'invention,
- la **figure 2** représente une vue de côté d'un dispositif d'adaptation conforme à l'invention,
- la **figure 3** représente une vue de dessus du dispositif d'adaptation de la figure 1,
- la **figure 4** représente une vue de face, selon la direction F de la figure 3, du dispositif d'adaptation conforme à l'invention.

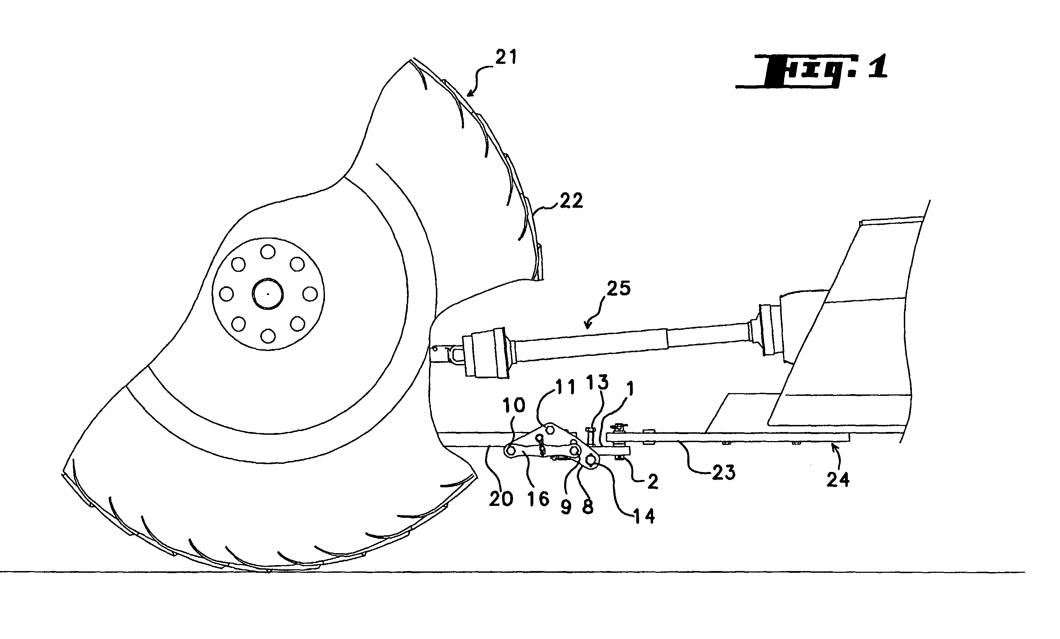

La figure 1 montre le dispositif d'adaptation conforme à l'invention, une fois monté sur une barre d'attelage (20) d'un tracteur (21) lequel n'est que partiellement représenté par une roue (22). Le dispositif d'adaptation réalise l'interface entre la barre d'attelage (20) et un timon (23) d'une machine agricole (24). Un arbre de transmission (25) reliant la machine agricole à la prise de force du tracteur (21) est également représenté sur cette figure 1.

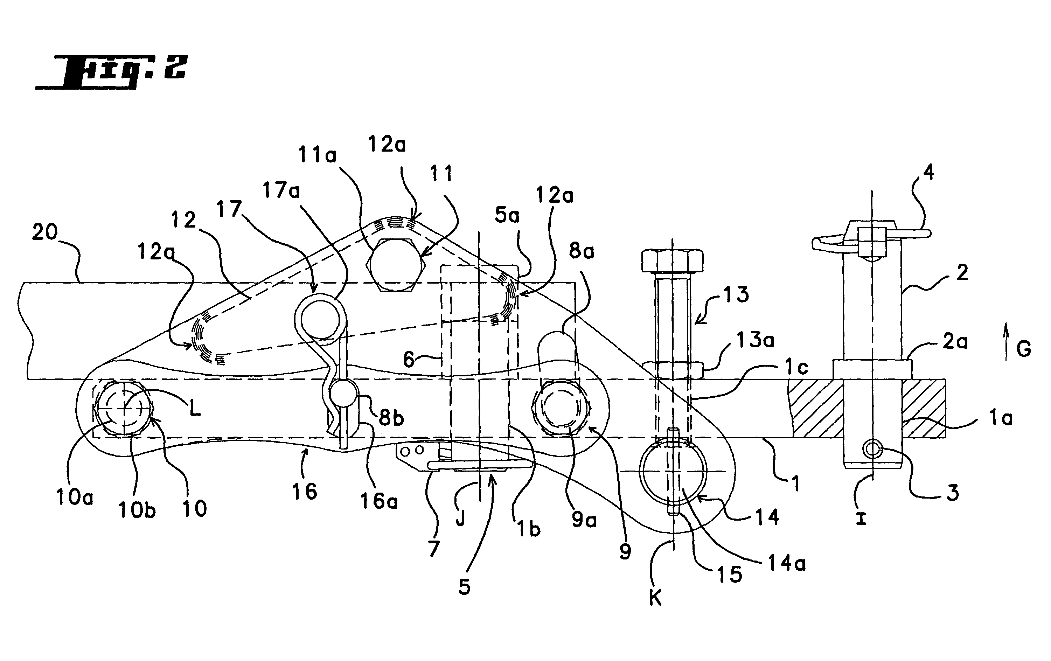

Le dispositif d'adaptation représenté plus en détail à la figure 2 comporte une barre d'adaptation (1) partiellement découpée (hachures) pour montrer à l'une de ses extrémités un perçage (1a) d'axe (I) et le montage d'un axe d'attelage (2). L'axe d'attelage (2) repose sur la barre d'adaptation (1) grâce à un épaulement (2a). Une goupille élastique (3) permet de maintenir l'axe d'attelage (2) en place. Une goupille amovible (4) peut également être montée sur l'axe d'attelage (2), lequel s'étend orthogonalement au plan d'extension (horizontal) de ladite barre d'adaptation (1). Cette dernière présente un autre perçage (1b) d'axe (J) destiné à être traversé par un axe de liaison (5) permettant de lier le dispositif d'adaptation à une barre d'attelage (20) (figure 1) d'un tracteur. L'axe de liaison (5) est avantageusement associé selon le cas à une douille (6) pour s'adapter à un diamètre plus important du trou d'attelage de la barre d'attelage (20). L'axe de liaison (5) est par exemple amovible et présente un épaulement (5a) à l'une de ses extrémités et une autre goupille amovible complémentaire (7) à son autre extrémité. La figure 2 montre le dispositif d'adaptation monté sur la barre d'attelage (20) d'un tracteur (21). L'axe de liaison (5) est donc monté de façon amovible sur la barre d'adaptation (1).

Le dispositif d'adaptation comporte également un flasque (8) monté latéralement de chaque côté de la barre d'adaptation (1) à l'aide de deux tiges de montage (9, 10) traversant ledit flasque (8). A ce titre, l'une (10) des tiges de montage (9, 10) sert d'axe de pivotement de ladite barre d'adaptation (1) par rapport auxdits flasques (8).

La tige de montage (10) servant d'axe de pivotement de la barre d'adaptation (1) s'étend à l'extrémité de ladite barre d'adaptation (1) éloignée de celle où s'étend l'axe d'attelage (2).

L'autre tige de montage (9) traverse une ouverture (8a) ménagée dans chaque flasque (8) qui autorise un pivotement de la barre d'adaptation (1) par rapport auxdits flasques (8) de la tige de montage (10) servant d'axe de pivotement. L'ouverture (8a) est de préférence une ouverture oblongue sensiblement centrée sur l'axe (L) de la tige de montage (10) servant d'axe de pivotement.

Avantageusement les deux tiges de montage (9, 10) sont sensiblement parallèles.

Les deux tiges de montage (9, 10) s'étendent sensiblement horizontalement lorsque le dispositif d'adaptation est monté sur la barre d'attelage (20). Cette ouverture oblongue (8a) permet à la barre d'attelage (20) de pivoter par rapport au flasque (8) sur une course délimitée par ladite ouverture oblongue (8a) et le montage des deux flasques (8) est de préférence symétrique par rapport à la barre d'attelage (20). Selon un exemple de réalisation du dispositif d'adaptation conforme à l'invention, les tiges de montage (9, 10) sont des vis lesquelles sont vissées dans des taraudages (9a, 10a) correspondants de la barre d'attelage (20).

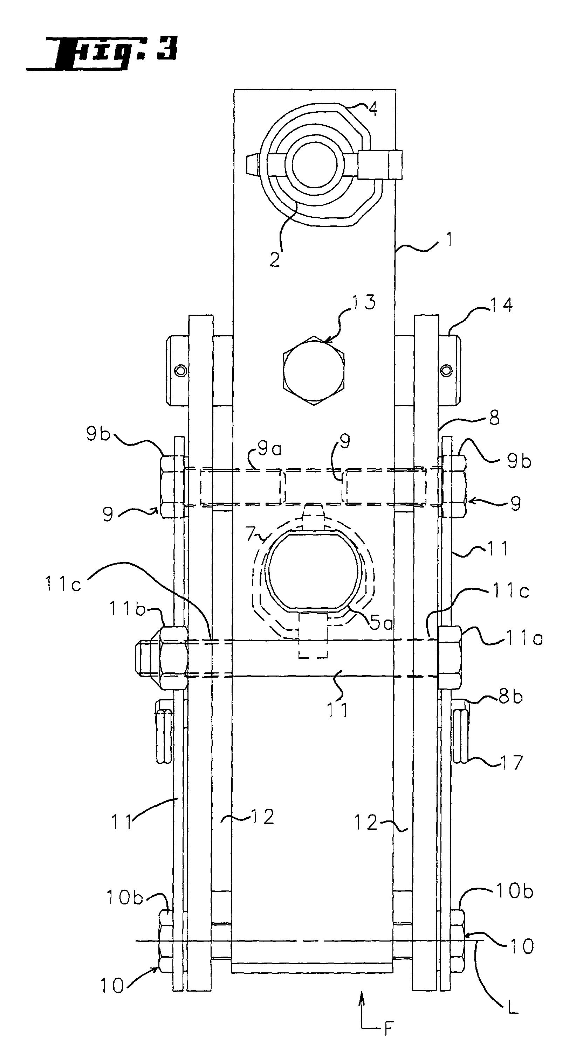

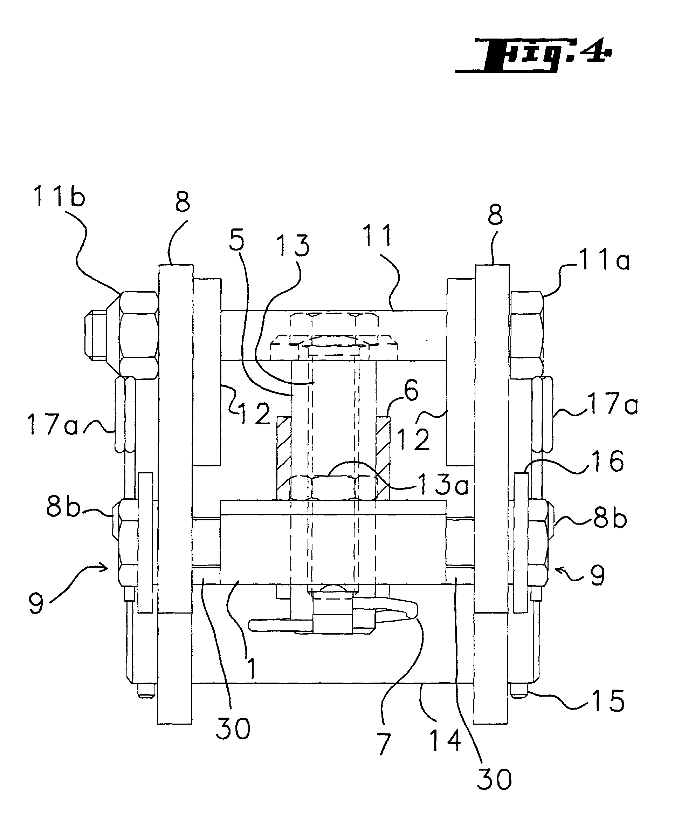

Le dispositif d'adaptation conforme à l'invention comporte également une tige de blocage (11) représentée également aux figures 3 et 4. La tige de blocage (11) est liée aux deux flasques (8) et localisée dans une zone s'étendant entre les deux tiges de montage (9, 10). Avantageusement, la tige de blocage (11) s'étend plus haut que les deux tiges de montage (9, 10). La tige de blocage (11) traverse une ouverture (11c) correspondante de chaque flasque (8), comme cela est représenté par exemple à la figure 3, et est constituée d'une vis permettant de serrer latéralement les deux flasques (8). La tige de blocage (11) s'étend sensiblement parallèlement à la tige de montage (10) servant d'axe de pivotement de la barre d'adaptation (1). La tige de blocage (11) est donc pourvue d'une tête de vis (11a) et d'un écrou (11b) prenant appui sur le flasque (8) respectif pour obtenir un serrage complémentaire de l'un vers l'autre des flasques (8).

Avantageusement chaque flasque (8) est pourvu d'une plaque d'appui (12) traversée par la tige de blocage (11). La plaque d'appui (12) est fixée sur le flasque (8) correspondant à l'aide de points de soudure (12a). Les plaques d'appui (12) sont destinées à enserrer la barre d'attelage (20) lorsque le dispositif d'adaptation est monté sur cette dernière. Le dispositif d'adaptation comporte également une vis de serrage (13) liée à la barre d'adaptation (1) et venant en appui contre une partie (14) solidaire de l'un au moins des flasques (8), de manière à pouvoir enserrer la barre d'attelage (20) entre la barre d'adaptation (1) et la tige de blocage (11), lors de la manoeuvre de la vis de serrage (13). Avantageusement, la partie (14) contre laquelle la vis de serrage prend appui est constituée d'un axe horizontal (14a) traversant les flasques (8) et sur lequel lesdits flasques peuvent coulisser latéralement. L'axe (14a) s'étend sensiblement parallèlement à la tige de montage (10) servant d'axe de pivotement de la barre d'attelage (20).

La partie (14) solidaire de l'un au moins des flasques (8) et contre laquelle la vis de serrage (13) prend appui, s'étend de préférence en dessous de la barre d'adaptation (1), comme on peut le voir sur la figure 2 notamment.

La vis de serrage (13) est sensiblement parallèle à l'axe d'attelage (2) et traverse un trou (1c) ménagé dans la barre d'adaptation (1). Le trou (1c) d'axe (K), par exemple parallèle aux axes (I) et (J), est un trou taraudé.

La vis de serrage (13) peut ainsi traverser la barre d'adaptation (1) et venir en saillie sous ladite barre d'adaptation (1).

La vis de serrage (13) peut être bloquée en position sur la barre d'adaptation (1) à l'aide d'un contre-écrou (13a) susceptible d'être serré contre ladite barre d'adaptation (1).

L'extrémité de la vis de serrage (13), faisant saillie sous la barre d'adaptation (1), vient en appui contre une partie (14) solidaire de l'un au moins des flasques (8).

Avantageusement l'axe horizontal (14a) traversant les deux flasques (8) est maintenu en position à l'aide de goupilles élastiques (15). Ainsi après un desserrage du contre-écrou (13a), il est possible d'augmenter davantage l'écartement entre l'axe horizontal (14a) et la barre d'adaptation (1), cette dernière étant pivotée vers le haut selon la flèche (G) de la figure 2. Un tel pivotement n'est possible que lorsque les vis de montage (9, 10) de chaque flasque (8) sont desserrées. Les flasques (8) peuvent coulisser sur l'axe horizontal (14a) lorsque ces derniers sont déplacés latéralement sous l'effet du serrage des vis de montage (9, 10).

L'axe de liaison (5) s'étend par exemple entre les deux tiges de montage (9, 10). Avantageusement, l'axe de liaison (5) s'étend entre la tige de montage (9) la plus proche de l'axe d'attelage (2) et la tige de blocage (11).

Le dispositif d'adaptation conforme à l'invention est également pourvu d'un mécanisme de blocage (16) des vis de montage (9, 10). Le mécanisme de blocage (16) peut avantageusement être utilisé comme outil de serrage et de desserrage des vis de montage (9, 10) et éventuellement de la tige de blocage (11). Le mécanisme de blocage (16) présente donc des ouvertures dont la forme est complémentaire à la forme de la tête (9b, 10b) des vis de montage (9, 10) et éventuellement de la tige de blocage (11). Cette forme complémentaire, par exemple hexagonale, permet de bloquer en rotation les vis de montage (9, 10) lorsque le mécanisme de blocage (16) est monté sur les deux vis de montage (9) et (10).

Le dispositif d'adaptation comporte avantageusement un mécanisme de blocage (16) pour chaque flasque (8).

Chaque mécanisme de blocage (16) est d'une part traversé par un téton (8b) solidaire du flasque (8) correspondant et d'autre part associé à un moyen de retenue (17) monté sur ledit téton (8b). Le moyen de retenue (17) est constitué d'une goupille (17a) facilement amovible.

Selon un exemple de réalisation du dispositif d'adaptation, chaque flasque (8) présente un téton (8b) s'étendant orthogonalement au plan d'extension (vertical) dudit flasque (8). Ce téton (8b) traverse l'orifice (16a) correspondant ménagé dans le mécanisme de blocage (16). La goupille (17a) est montée sur le téton (8b) pour éviter un dégagement du mécanisme de blocage (16) des têtes (9b, 10b).

L'orifice (16a) présente une forme adaptée, par exemple oblongue ou longiligne, pour permettre au téton (8b) d'y occuper différentes positions en fonction du pivotement relatif entre la barre d'adaptation (1) et les flasques (8). En effet, la barre d'adaptation (1) pivote autour de l'axe (L) (voir les figures 1 et 2 notamment) de la vis de montage (10) sous l'action de la vis de serrage (13). Un tel pivotement déplace la vis de montage (9) dans l'ouverture (8a) par exemple oblongue et modifie également la position du mécanisme de blocage (16) vis-à-vis du flasque (8) correspondant et par conséquent du téton (8b). La forme et/ou les dimensions de l'orifice (16a) doit/doivent donc être choisie(s) de manière à ce que le téton (8b) puisse traverser ledit orifice (16a) quelle que soit la position de la barre d'adaptation (1) par rapport aux flasques (8).

La figure 3 représente une vue de dessus du dispositif d'adaptation conforme à l'invention avant son montage sur une barre d'attelage (20) d'un tracteur.

La figure 4 représente le dispositif d'adaptation de la figure 3, selon la direction F, indiquée sur ladite figure 3.

Pour utiliser le dispositif d'adaptation, il convient de desserrer les vis de montage (9, 10) et la tige de blocage (11) de manière à pouvoir y introduire la barre d'attelage (20) selon la direction (F) de la figure 3. On fixe ensuite la barre d'attelage (20) sur la barre d'adaptation (1) à l'aide de l'axe de liaison (5) en utilisant le cas échéant la douille (6).

On pivote ensuite la barre d'adaptation (1) vers le haut selon la flèche (G) de la figure 2 de manière à enserrer la barre d'attelage (20) entre la barre d'adaptation (1) et la tige de blocage (11). On procède ensuite au serrage des vis de montage (9) et (10) de manière à enserrer latéralement la barre d'attelage (20) entre les plaques d'appui (12) solidaires des flasques (8).

Le serrage de l'écrou (11b) de la tige de blocage (11) permet d'augmenter la cohésion ainsi obtenue. Les plaques d'appui (12) permettent également d'enserrer la barre d'attelage (20), avant que les flasques (8) n'arrivent en butée contre la barre d'adaptation (1). Il subsiste ainsi un espace libre (30) (voir par exemple la figure 4) permettant d'obtenir un serrage optimal de la barre d'attelage (20). Ceci est important dans le cas où la barre d'attelage (20) présente une largeur légèrement inférieure ou égale à la largeur de la barre d'adaptation (1). Le serrage des vis de montage (9, 10) et de la tige de blocage (11) peut alors être optimisé et tout jeu mécanique entre la barre d'attelage (20) et la barre d'adaptation (1) est supprimé.

Le dispositif d'adaptation conforme à l'invention présente l'avantage de supprimer le jeu mécanique entre la barre d'attelage (20) et la barre d'adaptation (1) et par conséquent de s'adapter aux dispersions dimensionnelles que peuvent présenter les barres d'attelage (20).

L'excellente cohésion mécanique entre la barre d'attelage (20) et le dispositif d'adaptation permet également de répartir de façon plus homogène les forces et les contraintes provenant d'un timon d'attelage (23).

Un autre avantage non négligeable du dispositif provient du mécanisme de blocage (16) lequel empêche un desserrage des vis de montage (9, 10).

## Revendications

1. Dispositif d'adaptation pour une barre d'attelage (20) d'un tracteur agricole (21) comportant :
- une barre d'adaptation (1) pourvue d'un axe d'attelage (2) au voisinage de l'une de ses extrémités, ledit axe d'attelage (2) s'étendant sensiblement verticalement lorsque le dispositif d'adaptation est monté sur la barre d'attelage (20), et d'un axe de liaison (5) destiné à traverser une ouverture (20b) ménagée dans ladite barre d'attelage (20), et
- des moyens permettant de réduire ou d'annuler un jeu mécanique entre la barre d'attelage (20) et la barre d'adaptation (1),
***caractérisé en ce* que** lesdits moyens permettant de réduire ou d'annuler un jeu mécanique entre la barre d'attelage (20) et la barre d'adaptation (1) comportent :
- deux flasques (8) montés respectivement latéralement sur chaque côté de la barre d'adaptation (1) à l'aide de deux tiges de montage (9, 10), l'une (10) des tiges de montage (9, 10) servant d'axe de pivotement de ladite barre d'adaptation (1) par rapport auxdits flasques (8),
- une tige de blocage (11) liée aux deux flasques (8) et localisée dans une zone s'étendant entre les deux tiges de montage (9, 10), et
- une vis de serrage (13) liée à la barre d'adaptation (1) et venant en appui contre une partie (14) solidaire de l'un au moins des flasques (8), de manière à pouvoir enserrer la barre d'attelage (20) entre la barre d'adaptation (1) et la tige de blocage (11) lors de la manoeuvre de la vis de serrage (13), lesdites tiges de montage (9, 10) servant à enserrer latéralement la barre d'adaptation (1) et la barre d'attelage (20) via les deux flasques (8).

2. Dispositif d'adaptation selon la revendication 1, ***caractérisé en ce* que** la tige de montage (10) servant d'axe de pivotement de la barre d'adaptation (1), s'étend à l'extrémité de ladite barre d'adaptation (1) éloignée de celle où s'étend l'axe d'attelage (2).

3. Dispositif d'adaptation selon la revendication 1 ou 2, ***caractérisé en ce* que** l'autre tige de montage (9) traverse une ouverture (8a) ménagée dans chaque flasque (8) qui autorise un pivotement de la barre d'adaptation (1) par rapport auxdits flasques (8) autour de la tige de montage (10) servant d'axe de pivotement.

4. Dispositif d'adaptation selon la revendication 3, ***caractérisé en ce* que** ladite ouverture (8a) est une ouverture oblongue sensiblement centrée sur l'axe (L) de la tige de montage (10) servant d'axe de pivotement.

5. Dispositif d'adaptation selon l'une quelconque des revendications 1 à 4, ***caractérisé en ce* que** les deux tiges de montage (9 et 10) sont sensiblement parallèles.

6. Dispositif d'adaptation selon l'une quelconque des revendications 1 à 5, ***caractérisé en ce* que** les tiges de montage (9, 10) s'étendent sensiblement horizontalement lorsque le dispositif d'adaptation est monté sur la barre d'attelage (20).

7. Dispositif d'adaptation selon la revendication 6, ***caractérisé en ce* que** la tige de blocage (11) s'étend plus haut que les deux tiges de montage (9, 10).

8. Dispositif d'adaptation selon l'une quelconque des revendications 1 à 7, ***caractérisé en ce* que** la tige de blocage (11) traverse une ouverture (11c) correspondante de chaque flasque (8).

9. Dispositif d'adaptation selon l'une quelconque des revendications 1 à 8, ***caractérisé en ce* que** la tige de blocage (11) est constituée d'une vis permettant de serrer latéralement les flasques (8).

10. Dispositif d'adaptation selon l'une quelconque des revendications 1 à 9, ***caractérisé en ce* que** la tige de blocage (11) s'étend sensiblement parallèlement à la tige de montage (10) servant d'axe de pivotement de la barre d'adaptation (1).

11. Dispositif d'adaptation selon l'une quelconque des revendications 1 à 10, ***caractérisé en ce* que** la partie (14) solidaire de l'un au moins des flasques (8) et contre laquelle la vis de serrage (13) prend appui, est constituée d'un axe horizontal (14a) traversant les flasques (8) et sur lequel lesdits flasques (8) peuvent coulisser latéralement.

12. Dispositif d'adaptation selon la revendication 11, ***caractérisé en ce* que** l'axe (14a) s'étend sensiblement parallèlement à la tige de montage (10) servant d'axe de pivotement de la barre d'adaptation (1).

13. Dispositif d'adaptation selon la revendication 11 ou 12, prise en combinaison avec la revendication 7, ***caractérisé en ce* que** la partie (14) solidaire de l'un au moins des flasques (8) et contre laquelle la vis de serrage (13) prend appui, s'étend en dessous de la barre d'adaptation (1).

14. Dispositif d'adaptation selon l'une quelconque des revendications 1 à 13, ***caractérisé en ce* que** la vis de serrage (13) traverse un trou (1c) ménagé dans la barre d'adaptation (1).

15. Dispositif d'adaptation selon la revendication 14, ***caractérisé en ce* que** le trou (1c) ménagé dans la barre d'adaptation (1) est un trou taraudé.

16. Dispositif d'adaptation selon l'une quelconque des revendications 1 à 15, ***caractérisé en ce* que** la vis de serrage (13) est sensiblement parallèle à l'axe d'attelage (2).

17. Dispositif d'adaptation selon l'une quelconque des revendications 1 à 16, ***caractérisé en ce* que** l'axe de liaison (5) est monté de façon amovible sur la barre d'adaptation (1).

18. Dispositif d'adaptation selon l'une quelconque des revendications 1 à 17, ***caractérisé en ce* que** l'axe de liaison (5) s'étend entre les deux tiges de montage (9, 10).

19. Dispositif d'adaptation selon la revendication 18, ***caractérisé en ce* que** l'axe de liaison (5) s'étend entre la tige de montage (9) la plus proche de l'axe d'attelage (2) et la tige de blocage (11).

20. Dispositif d'adaptation selon l'une quelconque des revendications 1 à 19, ***caractérisé en ce* que** les tiges de montage (9, 10) sont des vis.

21. Dispositif d'adaptation selon la revendication 20, ***caractérisé en ce* qu'**il est pourvu d'un mécanisme de blocage (16) des vis de montage (9, 10).

22. Dispositif d'adaptation selon la revendication 21, ***caractérisé en ce* que** le mécanisme de blocage (16) est utilisé comme outil de serrage et de desserrage des vis de montage (9, 10).

23. Dispositif d'adaptation selon les revendications 22 et 21, ***caractérisé en ce* que** le mécanisme de blocage (16) est utilisé comme outil de serrage et de desserrage de la tige de blocage (11) réalisé sous forme de vis.

24. Dispositif d'adaptation selon l'une quelconque des revendications 21 à 23, ***caractérisé en ce* qu'**il comporte un mécanisme de blocage (16) pour chaque flasque (8).

25. Dispositif d'adaptation selon la revendication 24, ***caractérisé en ce* que** chaque mécanisme de blocage (16) est d'une part traversé par un téton (8b) solidaire du flasque (8) correspondant et d'autre part associé à un moyen de retenue (17) monté sur ledit téton (8b).

26. Dispositif d'adaptation selon la revendication 25, ***caractérisé en ce* que** le moyen de retenue (17) est constitué d'une goupille (17a) facilement amovible.

## Claims

1. Adapter device for a hitching bar (20) of an agricultural tractor (21) comprising:
- an adapter bar (1) equipped with a hitching pin (2) near one of its ends, the said hitching pin (2) extending substantially vertically when the adapter device is mounted on the hitching bar (20), and a connecting pin (5) intended to pass through an opening (20b) formed in the said hitching bar (20), and
- means of allowing the mechanical play between the hitching bar (20) and the adapter bar (1) to be reduced or cancelled,
***characterized in* that** the said means for reducing or cancelling mechanical play between the hitching bar (20) and the adapter bar (1) comprise:
- two cheek plates (8) mounted laterally one on each side of the adapter bar (1) using two mounting rods (9, 10), one (10) of the mounting rods (9, 10) acting as an axis about which the said adapter bar (1) can pivot with respect to the said cheek plates (8),
- a locking rod (11) connected to the two cheek plates (8) and located in a region lying between the two mounting rods (9, 10), and
- a clamping screw (13) connected to the adapter bar (1) and bearing against a part (14) secured to at least one of the cheek plates (8) so as to be able to clamp the hitching bar (20) between the adapter bar (1) and the locking rod (11) when the clamping screw (13) is turned, the said mounting rods (9, 10) being used to clamp the adapter bar (1) and the hitching bar (20) laterally via the two cheek plates (8).

2. Adapter device according to Claim 1, ***characterized in* that** the mounting rod (10) which acts as an axis of pivoting for the adapter bar (1), lies at the end of the said adapter bar (1) furthest from the end at which the hitching pin (2) extends.

3. Adapter device according to Claim 1 or 2, ***characterized in* that** the other mounting rod (9) passes through an opening (8a) formed in each cheek plate (8) which allows the adapter bar (1) to pivot with respect to the said cheek plates (8) about the mounting rod (10) which acts as an axis of pivoting.

4. Adapter device acording to Claim 3, ***characterized in* that** the said opening (8a) is an oblong opening substantially centred on the axis (L) of the mounting rod (10) which acts as an axis of pivoting.

5. Adapter device according to any one of Claims 1 to 4, ***characterized in* that** the two mounting rods (9 and 10) are substantially parallel.

6. Adapter device according to any one of Claims 1 to 5, ***characterized in* that** the mounting rods (9, 10) run substantially horizontally when the adapter device is mounted on the hitching bar (20).

7. Adapter device according to Claim 6, ***characterized in* that** the locking rod (11) extends higher up than the two mounting rods (9, 10).

8. Adapter device according to any one of Claims 1 to 7, ***characterized in* that** the locking rod (11) passes through a corresponding opening (11c) in each cheek plate (8).

9. Adapter device according to any one of Claims 1 to 8, ***characterized in* that** the locking rod (11) consists of a screw capable of clamping the cheek plates (8) laterally.

10. Adapter device according to any one of Claims 1 to 9, ***characterized in* that** the locking rod (11) runs substantially parallel to the mounting rod (10) which acts as an axis of pivoting for the adapter bar (1).

11. Adapter device according to any one of Claims 1 to 10, ***characterized in* that** the part (14) secured to at least one of the cheek plates (8), and against which the clamping screw (13) bears, consists of a horizontal pin (14a) passing through the cheek plates (8) and on which the said cheek plates (8) can slide laterally.

12. Adapter device according to Claim 11, ***characterized in* that** the pin (14a) runs substantially parallel to the mounting rod (10) which acts as an axis of pivoting for the adapter bar (1).

13. Adapter device according to Claim 11 or 12 taken in combination with Claim 7, ***characterized in* that** the part (14) secured to at least one of the cheek plates (8) and against which the clamping screw (13) bears, runs under the adapter bar (1).

14. Adapter device according to any one of Claims 1 to 13, ***characterized in* that** the clamping screw (13) passes through a hole (1c) made in the adapter bar (1).

15. Adapter device according to Claim 14, ***characterized in* that** the hole (1c) made in the adapter bar (1) is a tapped hole.

16. Adapter device according to any one of Claims 1 to 15, ***characterized in* that** the clamping screw (13) is substantially parallel to the hitching pin (2).

17. Adapter device according to any one of Claims 1 to 16, ***characterized in* that** the connecting pin (5) is mounted removably on the adapter bar (1).

18. Adapter device according to any one of Claims 1 to 17, ***characterized in* that** the connecting pin (5) runs between the two mounting rods (9, 10).

19. Adapter device according to Claim 18, ***characterized in* that** the connecting pin (5) runs between the mounting rod (9) closest to the hitching pin (2) and the locking rod (11).

20. Adapter device according to any one of Claims 1 to 19, ***characterized in* that** the mounting rods (9, 10) are screws.

21. Adapter device according to Claim 20, ***characterized in* that** it is provided with a mechanism (16) for locking the mounting screws (9, 10).

22. Adapter device according to Claim 21, ***characterized in* that** the locking mechanism (16) is used as a tool for tightening and slackening the mounting screws (9, 10).

23. Adapter device according to Claims 22 and 21, ***characterized in* that** the locking mechanism (16) is used as a tool for tightening and slackening the locking rod (11) produced in the form of a screw.

24. Adapter device according to any one of Claims 21 to 23, ***characterized in* that** it comprises a locking mechanism (16) for each cheek plate (8).

25. Adapter device according to Claim 24, ***characterized in* that** each locking mechanism (16) on the one hand has a stub (8b) secured to the corresponding cheek plate (8) passing through it and, on the other hand, is associated with a retaining means (17) mounted on the said stub (8b).

26. Adapter device according to Claim 25, ***characterized in* that** the retaining means (17) consists of an easily-removable pin (17a).

## Patentansprüche

1. Anpassungsvorrichtung für eine Zugstange (20) eines Ackerschleppers (21), die
- eine Anpassungsstange (1), die in der Nähe eines ihrer Enden mit einem Kupplungsbolzen (2), welcher sich im Wesentlichen vertikal erstreckt, wenn die Anpassungsvorrichtung an der Zugstange (20) angebracht ist, und einem Verbindungsbolzen (5), der eine in der Zugstange (20) ausgebildete Öffnung (20b) durchqueren soll, versehen ist, und
- Mittel, die eine Verringerung oder Beseitigung eines mechanischen Spiels zwischen der Zugstange (20) und der Anpassungsstange (1) gestatten,
umfasst,
***dadurch gekennzeichnet*, dass** die die Verringerung oder Beseitigung eines mechanischen Spiels zwischen der Zugstange (20) und der Anpassungsstange (1) gestattenden Mittel:
- zwei Flansche (8), die mittels zweier Befestigungsstangen (9, 10) jeweils lateral auf jeder Seite der Anpassungsstange (1) angebracht sind, wobei die eine (10) der Befestigungsstangen (9, 10) als Schwenkachse der Anpassungsstange (1) bezüglich der Flansche (8) dient,
- eine mit den beiden Flanschen (8) verbundene Verriegelungsstange (11), die in einem Bereich angeordnet ist, der sich zwischen den beiden Befestigungsstangen (9, 10) erstreckt, und
- eine mit der Anpassungsstange (1) verbundene Klemmschraube (13), die an einem mit mindestens einem der Flansche (8) fest verbundenen Teil (14) zur Anlage kommt, so dass die Zugstange (20) bei der Betätigung der Klemmschraube (13) zwischen der Anpassungsstange (1) und der Verriegelungsstange (11) eingeklemmt werden kann, wobei die Befestigungsstangen (9, 10) dazu dienen, die Anpassungsstange (1) und die Zugstange (20) über die beiden Flansche (8) seitlich einzuklemmen,
umfassen.

2. Anpassungsvorrichtung nach Anspruch 1, ***dadurch gekennzeichnet,* dass** sich die als Schwenkachse der Anpassungsstange (1) dienende Befestigungsstange (10) an dem Ende der Anpassungsstange (1) erstreckt, das von dem Ende, an dem sich der Kupplungsbolzen (2) erstreckt, entfernt liegt.

3. Anpassungsvorrichtung nach Anspruch 1 oder 2, ***dadurch gekennzeichnet*, dass** die andere Befestigungsstange (9) eine in jedem Flansch (8) ausgebildete Öffnung (8a) durchquert, die ein Schwenken der Anpassungsstange (1) bezüglich der Flansche (8) um die als Schwenkachse dienende Befestigungsstange (10) gestattet.

4. Anpassungsvorrichtung nach Anspruch 3, ***dadurch gekennzeichnet*, dass** es sich bei der Öffnung (8a) um eine längliche Öffnung handelt, die im Wesentlichen auf der Achse (L) der als Schwenkachse dienenden Befestigungsstange (10) zentriert ist.

5. Anpassungsvorrichtung nach irgend einem der Ansprüche 1 bis 4, ***dadurch gekennzeichnet*, dass** die beiden Befestigungsstangen (9 und 10) im Wesentlichen parallel zueinander verlaufen.

6. Anpassungsvorrichtung nach irgend einem der Ansprüche 1 bis 5, ***dadurch gekennzeichnet*, dass** sich die Befestigungsstangen (9, 10) im Wesentlichen horizontal erstrecken, wenn die Anpassungsvorrichtung an der Zugstange (20) angebracht ist.

7. Anpassungsvorrichtung nach Anspruch 6, ***dadurch gekennzeichnet*, dass** sich die Verriegelungsstange (11) höher erstreckt als die beiden Befestigungsstangen (9, 10).

8. Anpassungsvorrichtung nach irgend einem der Ansprüche 1 bis 7, ***dadurch* *gekennzeichnet,* dass** die Verriegelungsstange (11) eine entsprechende Öffnung (11c) jedes Flansches (8) durchquert.

9. Anpassungsvorrichtung nach irgend einem der Ansprüche 1 bis 8, ***dadurch gekennzeichnet*, dass** die Verriegelungsstange (11) aus einer Schraube besteht, die ein laterales Festspannen der Flansche (8) gestattet.

10. Anpassungsvorrichtung nach irgend einem der Ansprüche 1 bis 9, ***dadurch gekennzeichnet*, dass** sich die Verriegelungsstange (11) im Wesentlichen parallel zu der als Schwenkachse der Anpassungsstange (1) dienenden Befestigungsstange (10) erstreckt.

11. Anpassungsvorrichtung nach irgend einem der Ansprüche 1 bis 10, ***dadurch gekennzeichnet*, dass** der mit mindestens einem der Flansche (8) fest verbundene Teil (14), an dem sich die Klemmschraube (13) abstützt, aus einem die Flansche (8) durchquerenden horizontalen Zapfen (14a) besteht, an dem die Flansche (8) lateral gleiten können.

12. Anpassungsvorrichtung nach Anspruch 11, ***dadurch gekennzeichnet*, dass** sich der Zapfen (14a) im Wesentlichen parallel zu der als Schwenkachse der Anpassungsstange (1) dienenden Befestigungsstange (10) erstreckt.

13. Anpassungsvorrichtung nach Anspruch 11 oder 12, in Kombination mit Anspruch 7, ***dadurch gekennzeichnet*, dass** der mit mindestens einem der Flansche (8) fest verbundene Teil (14), an dem sich die Klemmschraube (13) abstützt, unter der Anpassungsstange (1) erstreckt.

14. Anpassungsvorrichtung nach irgend einem der Ansprüche 1 bis 13, ***dadurch gekennzeichnet*, dass** die Klemmschraube (13) ein in der Anpassungsstange (1) ausgebildetes Loch (1c) durchquert.

15. Anpassungsvorrichtung nach Anspruch 14, ***dadurch gekennzeichnet*, dass** das es sich bei dem in der Anpassungsstange (1) ausgebildeten Loch (1c) um ein Gewindeloch handelt.

16. Anpassungsvorrichtung nach irgend einem der Ansprüche 1 bis 15, ***dadurch gekennzeichnet*, dass** die Klemmschraube (13) im Wesentlichen parallel zum Kupplungsbolzen (2) verläuft.

17. Anpassungsvorrichtung nach irgend einem der Ansprüche 1 bis 16, ***dadurch gekennzeichnet*, dass** der Verbindungsbolzen (5) lösbar an der Anpassungsstange (1) angebracht ist.

18. Anpassungsvorrichtung nach irgend einem der Ansprüche 1 bis 17, ***dadurch gekennzeichnet*, dass** sich der Verbindungsbolzen (5) zwischen den beiden Befestigungsstangen (9, 10) erstreckt.

19. Anpassungsvorrichtung nach Anspruch 18, ***dadurch gekennzeichnet*, dass** sich der Verbindungsbolzen (5) zwischen der am nächsten zum Kupplungsbolzen (2) liegenden Befestigungsstange (9) und der Verriegelungsstange (11) erstreckt.

20. Anpassungsvorrichtung nach irgend einem der Ansprüche 1 bis 19, ***dadurch gekennzeichnet*, dass** es sich bei den Befestigungsstangen (9, 10) um Schrauben handelt.

21. Anpassungsvorrichtung nach Anspruch 20, ***dadurch gekennzeichnet*, dass** ein Mechanismus (16) zur Verriegelung der Befestigungsschrauben (9, 10) vorgesehen ist.

22. Anpassungsvorrichtung nach Anspruch 21, ***dadurch gekennzeichnet*, dass** der Verriegelungsmechanismus (16) als Werkzeug zum Festziehen und Lösen der Befestigungsschrauben (9, 10) verwendet wird.

23. Anpassungsvorrichtung nach den Ansprüchen 22 und 21, ***dadurch gekennzeichnet*, dass** der Verriegelungsmechanismus (16) als Werkzeug zum Festziehen und Lösen der in Schraubenform ausgebildeten Verriegelungsstange (11) verwendet wird.

24. Anpassungsvorrichtung nach irgend einem der Ansprüche 21 bis 23, ***dadurch gekennzeichnet*, dass** sie einen Verriegelungsmechanismus (16) für jeden Flansch (8) aufweist.

25. Anpassungsvorrichtung nach Anspruch 24, ***dadurch gekennzeichnet*, dass** jeder Verriegelungsmechanismus (16) einerseits von einem mit dem entsprechenden Flansch (8) fest verbundenen Bolzen (8b) durchquert wird und andererseits einem an dem Bolzen (8b) angebrachten Haltemittel (17) zugeordnet ist.

26. Anpassungsvorrichtung nach Anspruch 25, ***dadurch gekennzeichnet*, dass** das Haltemittel (17) aus einem leicht lösbaren Stift (17a) besteht.
